# EUROPEAN PATENT APPLICATION

(11) **EP 4 590 064 A1**
(43) Date of publication of application: **23.07.2025**
(21) Application number: 23865293.7
(22) Date of filing: 31.08.2023
(51) Int. Cl.: H04W 76/14, H04W 4/44, H04W 4/46, H04W 16/26, H04W 88/04, H04W 92/18

(54) **COMMUNICATION DEVICE, COMMUNICATION SYSTEM, CONTROL METHOD AND PROGRAM**

(30) Priority: 14.09.2022 JP 2022145756
(71) Applicant: CANON KABUSHIKI KAISHA, Tokyo 146-8501 (JP)
(72) Inventor: KATSURAGI Tetsuya, Tokyo 146-8501 (JP)
(74) Representative: Canon Europe Limited
(86) International application number: PCT/JP2023/031667
(87) International publication number: WO 2024/057937

(57) **Abstract**

A communication apparatus (200) having a Sidelink communication function includes a determination means (201) for determining whether another communication apparatus (20C) and a relay apparatus having a Sidelink relay function are able to communicate with each other, and a communication means (204) for, in a case where the other communication apparatus (20C) and the relay apparatus (10) are determined to be unable to communicate with each other by the determination means (201), transferring a message to be transmitted and received between the other communication apparatus (20C) and the relay apparatus (10).

## Description

### TECHNICAL FIELD

The present disclosure relates to a communication apparatus, a communication system, a control method, and a program.

### BACKGROUND

In recent years, the development of 3GPP (registered trademark) (3rd Generation Partnership Project) LTE (Long Term Evolution) and 5G (NR; New Radio) specifications has been underway. Among these, a standard specification called Sidelink communication (hereinafter, Sidelink) is being developed. The specification enables direct wireless communication between devices (UEs; User Equipments) using an interface called PC5, without the intermediary of a mobile communication network (such as a core network and base stations). NR Sidelink communication uses Layer-2 IDs (L2IDs; Sidelink communication identifiers) as identifiers representing a transmission source device and a transmission destination device.

Meanwhile, a system is being provided where vehicles perform direct wireless communication with each other using Sidelink communication to acquire information about vehicles nearby (such as position, speed, and vehicle control information) and provide safe driving assistance to drivers as needed.

In a technique proposed in Patent Literature 1, a server acquires position information and speed information about moving vehicles, and stores map information that associates current positions of the vehicles with Layer-2 IDs assigned to the vehicles. The vehicles then communicate with each other to exchange information between the vehicles using the Layer-2 IDs based on the map information.

Moreover, the 3GPP (registered trademark) is developing a specification for extending a communication range of Sidelink communication using a relay apparatus (Sidelink relay).

Patent Literature 2 proposes a technique for connecting a terminal (UE) outside a coverage of a base station to a relay apparatus (Sidelink relay) installed within the coverage of the base station via Sidelink communication to enable communication with the base station.

### Citation List

### Patent Literature

Patent Literature 1: Japanese Patent Application Laid-Open No. 2020-188405
Patent Literature 2: Japanese Patent Application Laid-Open No. 2021-078140

### SUMMARY

However, the conventional techniques do not disclose a method for extending the communication range by relaying Sidelink communications.

An object of the present invention is to provide a communication apparatus and the like that can extend the communication range by relaying Sidelink communications.

A communication apparatus according to an aspect of the present disclosure includes the following components, i.e., the communication apparatus having a Sidelink communication function includes a determination means for determining whether another communication apparatus and a relay apparatus having a Sidelink relay function are able to communicate with each other, and a communication means for, in a case where the other communication apparatus and the relay apparatus are determined to be unable to communicate with each other by the determination means, transferring a message to be transmitted and received between the other communication apparatus and the relay apparatus.

According to the present disclosure, a communication range can be extended by relaying Sidelink communications.

### BRIEF DESCRIPTION OF DRAWINGS

[Fig. 1] Fig. 1 is a diagram illustrating a configuration example of a communication system according to the present disclosure.
[Fig. 2] Fig. 2 is a block diagram illustrating a functional configuration example of a roadside apparatus.
[Fig. 3] Fig. 3 is a block diagram illustrating a functional configuration example of a communication apparatus constituted by a vehicle.
[Fig. 4] Fig. 4 is a block diagram illustrating a hardware configuration example of the roadside apparatus.
[Fig. 5] Fig. 5 is a diagram illustrating an example of a data structure of a Sidelink communication message to be exchanged via the roadside apparatus.
[Fig. 6] Fig. 6 is a flowchart illustrating an example of processing at the roadside apparatus.
[Fig. 7] Fig. 7 is a flowchart illustrating an example of processing at the communication apparatus constituted by the vehicle.
[Fig. 8] Fig. 8 is a flowchart illustrating Sidelink reception processing (step S300).
[Fig. 9A] Fig. 9A is a flowchart illustrating connection request/acceptance transfer processing (step S500).
[Fig. 9B] Fig. 9B is a flowchart illustrating message transfer processing (step S600).
[Fig. 10A] Fig. 10A is a diagram illustrating an example of a communication sequence between the roadside apparatus and in-vehicle terminals.
[Fig. 10B] Fig. 10B is a diagram illustrating an example of a communication sequence between the roadside apparatus and vehicles, where relay processing by another vehicle is not included.
[Fig. 11] Fig. 11 is a diagram illustrating a broadcast communication method.
[Fig. 12] Fig. 12 is a diagram illustrating a multicast (groupcast) communication method.
[Fig. 13] Fig. 13 is a diagram illustrating a unicast communication method.
[Fig. 14] Fig. 14 is a diagram illustrating an example of a data structure of a discovery message when a terminal (UE) performs direct Sidelink communication.

### DETAILED DESCRIPTION

An exemplary embodiment will be described in detail below with reference to the attached drawings. Note that the following exemplary embodiment is not intended to limit the invention set forth in the claims. While the exemplary embodiment describes a plurality of features, all of the plurality of features is not necessarily essential to the invention, and the plurality of features may be freely combined. In the attached drawings, the same or similar components are denoted by the same reference numerals, and redundant descriptions will be omitted.

Conventionally, when terminals exchange information using Sidelink communications without the intermediary of a relay apparatus, a terminal serving as a UE is unable to exchange information before entering a state where direct connection with its partner terminal serving as a UE can be established. For example, at locations where radio waves are blocked by the presence of buildings or numerous vehicles, such as intersections (especially ones with poor visibility), the communication range can be narrow due to a short range and many blind spots. In view of this, roadside apparatuses serving as Sidelink relays are desirably installed to extend the communication range between terminals (UEs) by relaying Sidelink communications addressed to specific Layer-2 IDs.

However, the presence or absence of the roadside apparatuses at intersections is usually unknown to the terminals, and relay requests with a roadside apparatus specified have therefore been unable to be issued. Moreover, the roadside apparatuses have been unable to determine whether to relay received Sidelink messages unless the specific Layer-2 IDs to be relayed are known. The following exemplary embodiment solves such issues.

In the following exemplary embodiment, a roadside apparatus set near an intersection for the purpose of exchanging information related to traffic near the intersection is described as an example of the relay apparatus. However, the relay apparatus is not limited thereto. The relay apparatus can be set at any installation location, and the communication via the relay apparatus may have any purpose. The relay apparatus may be moved during relaying. The relay apparatus can be installed at a location without access to a mobile communication network, such as in an environment without coverage of base stations, but may be installed at a location with access to a mobile communication network. The relay apparatus may provide a relay function in a state of being connected to a mobile communication network. A plurality of relaying Layer-2 IDs corresponding to a plurality of respective use purposes may be set for a single relay apparatus.

### <Exemplary Embodiment>

### [System Configuration]

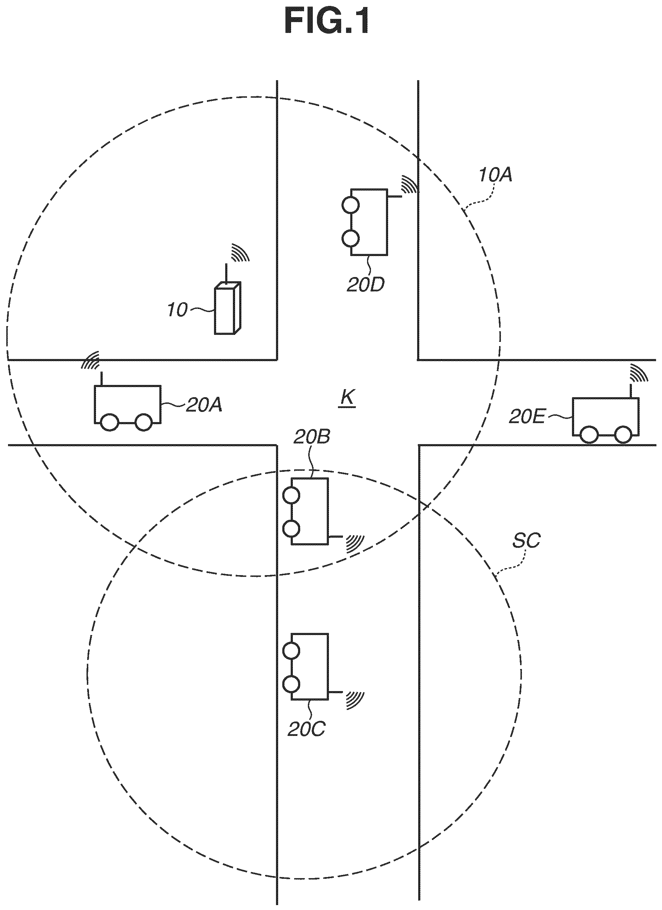

Fig. 1 is a diagram illustrating a configuration example of a communication system according to an exemplary embodiment of the present disclosure. The communication system includes a roadside apparatus 10 (an example of a relay apparatus) installed near an intersection K and vehicles (vehicles 20A to 20E) running near the intersection K.

In Fig. 1, the roadside apparatus 10 is an apparatus that has a Sidelink relay function (function as a Sidelink relay) and relays Sidelink communication by the Sidelink relay function. In the example of Fig. 1, the roadside apparatus 10 is installed at a roadside near the intersection K, for example, and communicates with vehicles, pedestrians, etc. The roadside apparatus 10 is particularly suitably installed near an intersection K with poor visibility.

In Fig. 1, the vehicles 20A to 20E represent vehicles running on a road near the intersection K. The vehicles 20A to 20E have the functions of a Sidelink communication apparatus (UE; User Equipment) and can performs Sidelink communication with external communication apparatuses. The vehicles 20A to 20E acquire information from outside the vehicles through Sidelink communication, display the information, and control the vehicles based on the information. The vehicles 20A to 20E can also acquire information about the own vehicles and notify external apparatuses of the information through Sidelink communication.

The roadside apparatus 10 is configured to, when receiving relay-requested messages from Sidelink communication apparatuses (UEs) including the vehicles 20A to 20E, retransmit the messages of the same content or modified messages depending on the content of the messages. In Fig. 1, an area 10A represents the communication range of the roadside apparatus 10.

The roadside apparatus 10 is assigned a Layer-2 ID "RRR" as a Sidelink communication identifier. The vehicles 20A to 20E are assigned respective Sidelink communication identifiers such as a Layer-2 ID "AAA", a Layer-2 ID "BBB", and a Layer-2 ID "CCC". In the present exemplary embodiment, the intersection K is also assigned a Layer-2 ID "KKK" as a Sidelink communication identifier for the sake of information exchange using Sidelink communication at the intersection. In the present exemplary embodiment, vehicles and the like are assumed as the UEs that support Sidelink communication. However, this is not restrictive. For example, the UEs may include user-carried UEs including tablet terminals and smartwatches, and user-worn UEs including wearable terminals such as a head-mounted display. The UEs may also include car navigation devices installed in vehicles.

### [Functional Configuration of Apparatuses]

Next, a functional configuration of the apparatuses according to the present exemplary embodiment will be described. The configuration of functional blocks described below is merely an example. Some (or all) of the functional blocks described may be replaced with other functional blocks that perform similar functions. Some of the functional blocks may be omitted. An additional functional block may be added. A single functional block described below may be divided into a plurality of functional blocks. A plurality of functional blocks may be integrated into a single functional block.

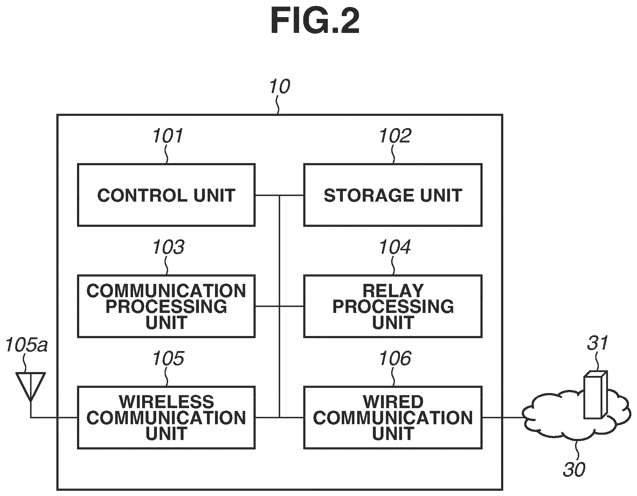

Fig. 2 is a block diagram illustrating a functional configuration example of the roadside apparatus according to the present exemplary embodiment. As illustrated in Fig. 2, the roadside apparatus 10 includes a control unit 101, a storage unit 102, a communication processing unit 103, a relay processing unit 104, a wireless communication unit 105, and a wired communication unit 106.

The control unit 101 controls operation of the roadside apparatus 10 based on a program and the like stored in the storage unit 102.

The storage unit 102 stores information that the control unit 101 uses for control, programs related to wireless and wired communications, other information, etc.

The communication processing unit 103 performs analysis and the like of Sidelink communication messages. For example, the communication processing unit 103 analyzes a received Sidelink communication message to determine its content, generates destination and source information using Layer-2 IDs, and generates the content of the Sidelink communication message to be transmitted.

The relay processing unit 104 performs processing related to relaying of Sidelink communications transmitted from other communication apparatuses. For example, the relay processing unit 104 analyzes Layer-2 IDs related to destinations, sources, and relays, setting information concerning the relaying, and the content of message payloads and the like, and determines operations concerning the relaying.

The wireless communication unit 105 transmits and receives signals corresponding to messages and the like to and from external wireless apparatuses via an antenna 105a using Sidelink communication. The wired communication unit 106 connects the roadside apparatus 10 to an external apparatus 31, such as an external server, via a wired network including an Internet 30, and transmits and receives information to and from the external apparatus 31. For example, the roadside apparatus 10 acquires information from the external apparatus 31 via the wired communication unit 106, and generates a Sidelink message corresponding to the acquired information using the communication processing unit 103. The roadside apparatus 10 can then transmits a signal corresponding to the message via the wireless communication unit 105.

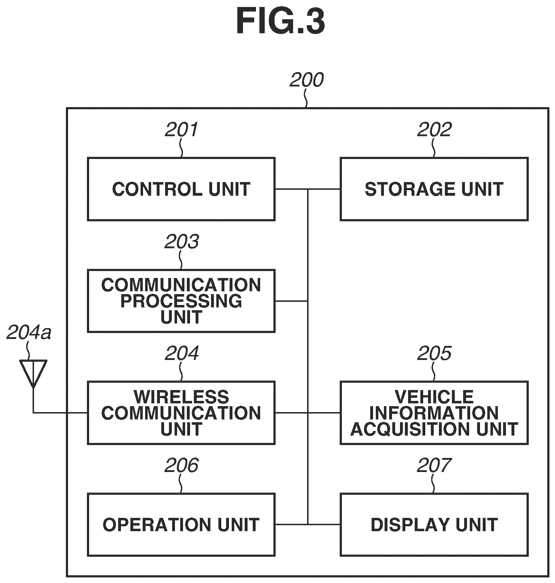

Fig. 3 is a block diagram illustrating a functional configuration example of a communication apparatus constituted by a vehicle (such as the vehicles 20A to 20E) according to the present exemplary embodiment.

As illustrated in Fig. 3, a communication apparatus 200 (an example of the communication apparatus, a first communication apparatus, and a second communication apparatus) includes a control unit 201 (an example of a determination means), a storage unit 202, a communication unit 203, and a wireless communication unit 204 (an example of a communication means). The communication apparatus 200 also includes a vehicle information acquisition unit 205, an operation unit 206, and a display unit 207.

The control unit 201 controls operation of the communication apparatus 200 based on a program and the like stored in the storage unit 202. The control unit 201 may be configured as a part of a control apparatus related to other operations of the own vehicle than the operation of the communication apparatus 200. The control unit 201 may be configured to perform various types of processing in cooperation with the control apparatus.

The storage unit 202 stores information that the control unit 201 uses for control, and information related to wireless and wired communications.

The communication processing unit 203 performs analysis and the like of Sidelink communication messages. For examples, the communication processing unit 203 analyzes the content of a Sidelink communication message received by the wireless communication unit 204 and, if the communication is directed to the own apparatus, performs processing corresponding to the content and responds as needed.

The wireless communication unit 204 transmits and receives information-encoded signals to and from external wireless apparatuses via an antenna 204a using Sidelink communication. The wireless communication unit 204 may be configured to support a communication method other than Sidelink communication as well.

The vehicle information acquisition unit 205 acquires vehicle information about the own vehicle. The vehicle information includes position information about the own vehicle, information to be notified to other vehicles, and other information.

The operation unit 206 accepts an operation related to the communication apparatus 200 of the own vehicle.

The display unit 207 displays information that the own vehicle acquires from outside through wireless communication, information about operations on the operation unit 206, and vehicle information and the like acquired via the vehicle information acquisition unit 205. The display unit 207 may be configured as a part of a display apparatus that displays information about the own vehicle other than the information related to the communication apparatus 200.

### [Hardware Configuration]

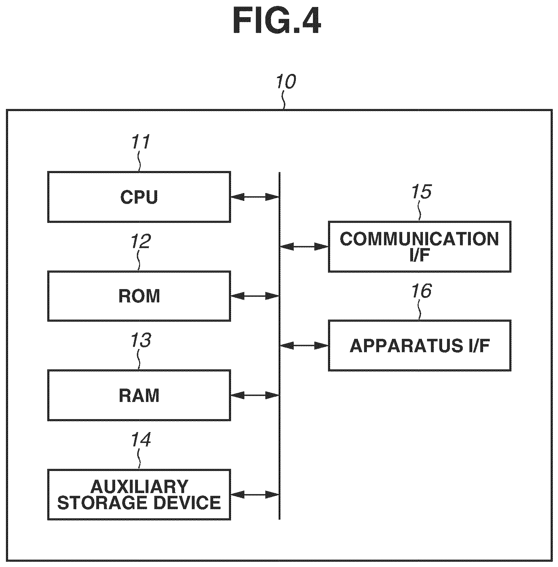

Fig. 4 is a block diagram illustrating a hardware configuration example of the roadside apparatus.

As illustrated in Fig. 4, the roadside apparatus 10 includes a CPU (central processing unit) 11, a ROM (read-only memory) 12, a RAM (random access memory) 13, and an auxiliary storage device 14. The roadside apparatus 10 also includes a communication I/F (interface) 15 and an apparatus I/F (interface) 16.

The CPU 11 implements the functions of the roadside apparatus 10 illustrated in Fig. 2 by controlling the entire roadside apparatus 10 using a computer program and data stored in the ROM 12 or the RAM 13. The roadside apparatus 10 may include one or more pieces of dedicated hardware different from the CPU 11, and at least part of the processing by the CPU 11 may be performed by the dedicated hardware. Examples of the dedicated hardware include an ASIC (application-specific integrated circuit), an FPGA (field-programmable gate array), and a DSP (digital signal processor).

The ROM 12 stores a program and the like that do not need to be changed. The RAM 13 temporarily stores a program and data supplied from the auxiliary storage device 14, data supplied from outside via the communication I/F 15, etc. The auxiliary storage device 14 includes a hard disk drive, for example, and stores various types of data. The CPU 11, the ROM 12, the RAM 13, and the auxiliary storage device 14 thus function as what is called a computer.

The communication I/F 15 is used to communicate with an external apparatus. For example, the wireless communication unit 105 (Fig. 2) performs wireless communication with an external apparatus using the communication I/F 15. This enables, for example, the roadside apparatus 10 to determine a situation based on information from the external apparatus 31 connected to the Internet 30, and notify vehicles and pedestrians of necessary information through Sidelink communication based on the determination.

The apparatus I/F 16 can be connected with various apparatuses. For example, a display apparatus and an input apparatus for a server administrator to check information managed by the roadside apparatus 10, and a sensor, a camera, and the like mounted on a housing of the roadside apparatus 10 are connected to the apparatus I/F 16. In such a case, for example, the roadside apparatus 10 can determine the conditions of vehicles and pedestrians traveling on a road based on information from the camera and sensor, and notify the vehicles and pedestrians of necessary information through Sidelink communication based on the determination.

Communication apparatuses 200 constituted by the vehicles 20A to 20E can also be implemented with a similar hardware configuration. For example, if each of the communication apparatuses 200 constituted by the vehicles 20A to 20E has the hardware configuration illustrated in Fig. 4, an imaging unit including a mechanism for performing imaging and a vehicle sensor can be connected to the apparatus I/F 16. This enables, for example, the vehicles 20A to 20E to determine the conditions of other vehicles and pedestrians travelling on the road based on information from the imaging unit and the sensor, and notify the other vehicles and pedestrians of necessary information through Sidelink communication based on the determination. In the present exemplary embodiment, the necessary information is transmitted to the roadside apparatus 10, and can thereby be notified to the other vehicles and pedestrians through Sidelink communication via relaying by the roadside apparatus 10.

More specifically, examples of the content that the roadside apparatus 10 and the communication apparatuses 200 communicate with other apparatuses using Sidelink communication include alert information based on a surrounding traffic situation detected from the sensor and camera information and future predictions, and sensor data and camera video images. By transmission and reception of such information, each vehicle can grasp information about oncoming vehicles from not only the presence or absence of oncoming vehicles at merging points such as the intersection K but also position and speed information about the oncoming vehicles, and can provide a driver with driving assistance. The capability for low-latency information exchange also enables handling of merging sequence control, emergency brake control, and the like. Moreover, road traffic information such as accidents, traffic congestion, emergency vehicles, construction vehicles, and abnormally driving vehicles detected by the roadside apparatus 10 and other vehicles, as well as information about pedestrian and bicycle movements, can be received by Sidelink communication and known in advance for safer driving.

Furthermore, pedestrians, bicycles, and the like with terminals (UEs) having similar functions can be informed in advance about dangerous movements and the like of vehicles in their vicinity. This can effectively reduce a risk of being involved in an accident.

### [Processing Example]

In the present exemplary embodiment, the vehicles (vehicles 20A to 20E) transmit discovery messages including relay requests to the roadside apparatus 10. The roadside apparatus 10 returns discovery response messages indicating relay acceptance in response to the received discovery messages including relay requests. Receiving the discovery response messages, the vehicles recognize that they have become relay targets of the roadside apparatus 10. The vehicles that have become relay targets can communicate with each other, using the roadside apparatus 10 as a relay apparatus.

Note that vehicles that are not relay targets can also perform direct Sidelink communication with other vehicles, i.e., Sidelink communication without the intervention of the roadside apparatus 10. According to the present exemplary embodiment, the own vehicle, once becoming a relay target, can perform Sidelink communication via the roadside apparatus 10 with vehicles and pedestrians with which direct Sidelink communication is unable to be performed due to reasons such as blocking of radio waves.

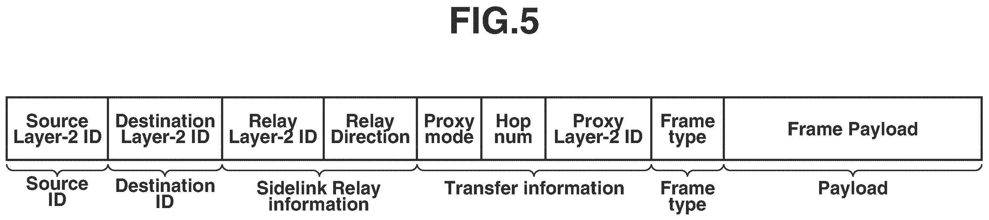

Fig. 5 is a diagram illustrating an example of a data structure of a Sidelink communication message to be exchanged via the roadside apparatus. A discovery message including a relay request can be transmitted using 5G ProSe direct discovery. Moreover, a solicitation message for 5G ProSe UE-to-Network Relay Discovery can be used for the transmission. ProSe is an acronym for (Proximity based Services).

In Fig. 5, "Source Layer-2 ID" stores a Layer-2 ID indicating the transmission source of information. For example, if the transmission source is the vehicle 20A, the Layer-2 ID "AAA" is stored. If the transmission source is the vehicle 20B, the Layer-2 ID "BBB" is stored. If the transmission source is the vehicle 20C, the Layer-2 ID "CCC" is stored. "Destination Layer-2 ID" stores a Layer-2 ID indicating the destination of the information. "Relay Layer-2 ID" stores a Layer-2 ID indicating the device that relays the message (device with the Sidelink relay function). For example, if the device that relays the message is the roadside apparatus 10, the Layer-2 ID "KKK" or "RRR" may be stored. "Relay Direction" stores information indicating in which direction the message is directed: to the terminal (UE) or the Sidelink relay. "Proxy mode" stores information indicating whether this message may be transferred by proxy.

"Hop num" stores information about the number of times (number of hops) the message has been transferred. "Proxy Layer-2 ID" stores information indicating the device by which the message has been transferred. "Frame type" stores information indicating the type of the message. "Frame Payload" stores the main body of the information to be exchanged between the devices using the message.

Next, processing at the roadside apparatus 10 and the vehicles (vehicles 20A to 20E) will be described.

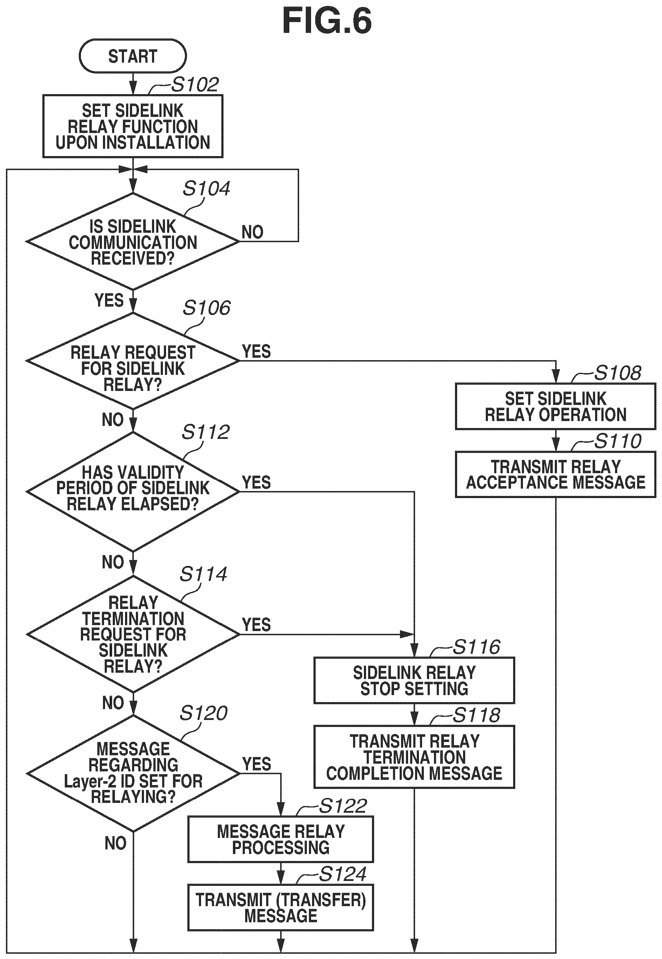

Fig. 6 is a flowchart illustrating an example of the processing at the roadside apparatus.

In step S102 of Fig. 6, the control unit 101 (Fig. 2) of the roadside apparatus 10 performs processing for setting parameters of the Sidelink relay function for the roadside apparatus 10 upon installation of the roadside apparatus 10. For example, the Layer-2 ID "KKK" assigned to the intersection K is stored in the storage unit 102 by the processing. This enables the roadside apparatus 10 to relay communications addressed to the Layer-2 ID "KKK". In the present exemplary embodiment, the Layer-2 ID "KKK" corresponds to a relaying Layer-2 ID.

In step S104, the control unit 101 determines whether a Sidelink communication message is received via the wireless communication unit 105. The processing proceeds to step S106 after a wait for an affirmative determination.

In step S106, the control unit 101 determines whether the message identified to be received in step S104 is a discovery message including a request for relaying by the Sidelink relay function (relay request message) (Fig. 5) via the communication processing unit 103. If the determination is affirmative, the control unit 101 advances the processing to step S108. If the determination is negative, the control unit 101 advances the processing to step S112.

In step S108, the control unit 101 sets an intermediate Sidelink relay function. Here, the control unit 101 sets the Layer-2 ID that is the transmission source of the discovery message including the relay request, identified in step S106, as the relay target of the Sidelink communication via the relay processing unit 104. Moreover, based on exchange of detailed information, the communication apparatuses 200 of the vehicles (vehicles 20A to 20E) also set parameters concerning the Sidelink relay function. This enables the roadside apparatus 10 to relay communication from the transmission source of the discovery message including the relay request. The control unit 101 also stores valid period information specified by the discovery message. The settings of the Sidelink relay function and the valid period information are stored in the storage unit 102.

In step S110, the control unit 101 returns a discovery response message indicating relay acceptance (the format of the discovery response message is the same as that of the discovery message, illustrated in Fig. 5) to the transmission source of the discovery message via the wireless communication unit 105. The control unit 101 advances the processing to step S104. A reply destination of the discovery response message is the transmission source indicated in the discovery message (Fig. 5). The transmission source of the discovery message can be informed of the information by including the Layer-2 ID "RRR" of the roadside apparatus 10 in the discovery response message.

If the relaying is unacceptable due to some reasons, the processing of step S108 may be omitted, and a message that the relaying is unacceptable may be returned to the transmission source of the discovery message.

As described above, the connection between the transmission source of the discovery message including the relay request and the roadside apparatus 10 is established by communication using a unicast communication method. The unicast communication method will be further described below.

On the other hand, in step S112, the control unit 101 determines whether a valid relay period in the message identified to be received in step S104 has elapsed via the communication processing unit 103. The valid period information stored in the storage unit 102 in step S108 is used for this determination. If the determination is affirmative, the control unit 101 advances the processing to step S116. If the determination is negative, the control unit 101 advances the processing to step S114.

In step S116, the control unit 101 stops the relay processing for the transmission source of the message identified to be received in step S104. The settings of the parameters concerning the Sidelink relay function (step S108) are cancelled.

In step S118, the control unit 101 transmits a relay termination completion message indicating that the message relay processing is terminated to the relay-requesting vehicle (vehicles 20A to 20E), and advances the processing to step S104. The transmission destination of the relay termination completion message is the transmission source included in the message identified to be received in step S104.

On the other hand, in step S114, the control unit 101 determines whether the message identified to be received in step S104 is a message for requesting the termination of relaying (relay termination request message) via the communication processing unit 103. If the determination is affirmative, the control unit 101 advances the processing to step S116. If the determination is negative, the control unit 101 advances the processing to step S120. The relay termination request message can include information about a period until the termination of the relay operation. In such a case, the processing of step S116 is performed at the timing specified by the relay termination request message.

In step S120, the control unit 101 determines whether the transmission source indicated by the message identified to be received in step S104 is the setting target of the Sidelink relay function in step S108. If the determination is affirmative, the control unit 101 advances the processing to step S122. If the determination is negative, the control unit 101 advances the processing to step S104.

In step S122, the control unit 101 generates a message to be transmitted (relayed) by rewriting necessary information such as the direction of the message identified to be received in step S104 via the relay processing unit 104.

If the message identified to be received in step S104 corresponds to a message that has already been transmitted in step S124, the processing of steps S122 and S124 can be omitted. In other words, if the same relay-requested message is received a plurality of times, the processing of steps S122 and S124 can be omitted. This can prevent the same massage from being relayed a plurality of times.

In step S124, the control unit 101 transmits (transfers) the message generated in step S122 as a Sidelink communication message using the wireless communication unit 1055, and advances the processing to step S104. The transmission destination (transfer destination) in step S124 may or may not be limited to the terminal (UE) that is the setting target of the Sidelink relay function in step S108. Messages such as the information exchange message identified to be received in step S104 are thereby relayed via the roadside apparatus 10. Information exchange messages are messages for exchanging information between vehicles, and include vehicle information such as a vehicle speed, vehicle acceleration, and accelerator position.

If the determination in step S120 is negative, a message that the message identified to be received in step S104 will not be relayed may be returned to the transmission source indicated by the message.

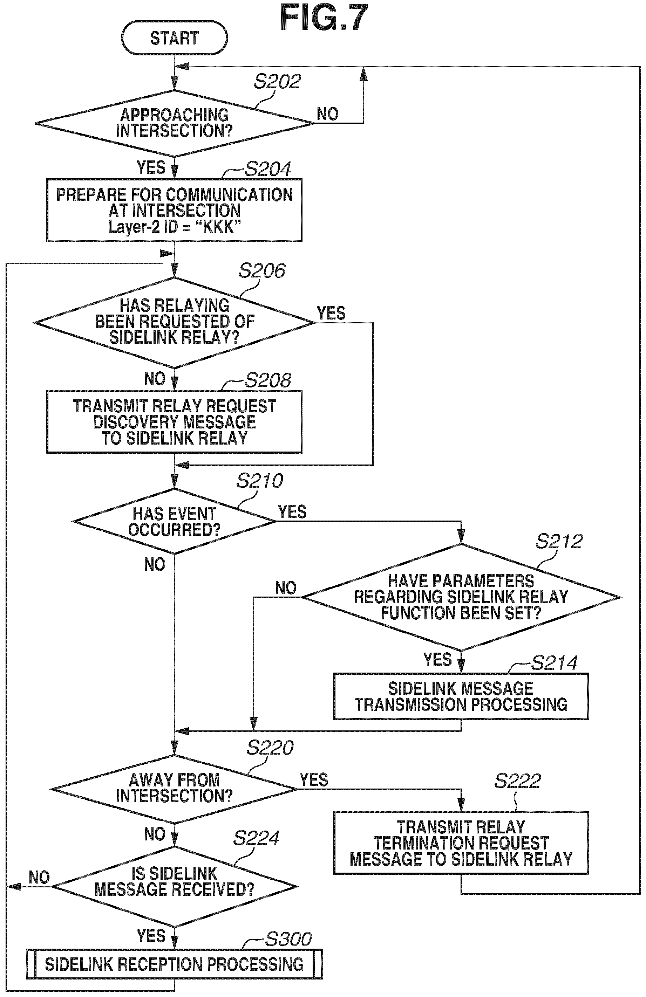

Fig. 7 is a flowchart illustrating an example of processing at the communication apparatuses constituted by the vehicles (vehicles 20A to 20E). The example of Fig. 7 indicates a case where the own vehicle (vehicles 20A to 20E) passes the intersection K (Fig. 1).

In step S202 of Fig. 7, the control unit 201 (Fig. 3) of the communication apparatus 200 determines whether the own vehicle (vehicles 20A to 20E) is approaching the intersection K based on the information acquired by the vehicle information acquisition unit 205. The control unit 201 advances the processing to step S204 after a wait for an affirmative determination.

In step S202, for example, the control unit 201 compares the position information acquired by a GPS (Global Positioning System) device or the like mounted on the own vehicle with intersection information stored in the storage unit 102. Based on a result of comparison between these pieces of information, the approach of the own vehicle to the intersection K can be identified. Here, the intersection information stores coordinates of intersections including the intersection K and the Layer-2 IDs assigned to the respective intersections (for example, the Layer-2 ID "KKK" assigned to the intersection K) in association with each other. The control unit 201 can identify the approach of the own vehicle to a specific intersection by comparing the position information (coordinates) acquired by the vehicle information acquisition unit 205 in real time with the coordinates of the intersections indicated by the intersection information.

In step S204, the control unit 201 performs communication preparation processing to enable Sidelink communication with the Layer-2 ID "KKK" assigned to the intersection K. For example, in step S204, the Layer-2 ID "KKK" is registered in the storage unit 202 as a communication partner.

In step S206, the control unit 201 determines whether the relaying with the Layer-2 ID "KKK" assigned to the intersection K has been requested (step S208) of the roadside apparatus 10. If the determination is affirmative, the control unit 201 advances the processing to step S210. If the determination is negative, the control unit 201 advances the processing to step S208.

In step S208, the control unit 201 transmits a relay request discovery message (Fig. 5) to the roadside apparatus 10 via the communication processing unit 203.

In step S210, the control unit 201 determines whether an event to be relayed and notified by the roadside apparatus 10 has occurred based on the information acquired by the vehicle information acquisition unit 205, or the like. If the determination is affirmative, the control unit 201 advances the processing to step S212. If the determination is negative, the control unit 201 advances the processing to step S220.

In step S212, the control unit 201 determines whether a discovery response message indicating relay acceptance (the format of the discovery response message is the same as that of the discovery message, illustrated in Fig. 5) has already been received from the roadside apparatus 10 and the parameters concerning the Sidelink relay function have been set by the communication apparatus 200. The discovery response message indicating relay acceptance is the message transmitted from the roadside apparatus 10 in step S110 (Fig. 6). If, in step S212, the determination is affirmative, the control unit 201 advances the processing to step S214. If the determination is negative, the control unit 201 advances the processing to step S220.

In step S214, the control unit 201 transmits a communication message (Fig. 7) related to the occurred event to the terminal that is the relay target via the roadside apparatus 10 (Sidelink relay). Frame Payload (Fig. 7) of the communication message describes information indicating that a specific event has occurred and furthermore information related to the occurred event.

In step S220, the control unit 201 determines whether the own vehicle is away from the intersection K based on the information acquired by the vehicle information acquisition unit 205. If the determination is affirmative, the control unit 201 advances the processing to step S222. If the determination is negative, the control unit 201 advances the processing to step S224. In step S220, for example, the control unit 201 can recognize that the own vehicle is away from the intersection K based on the position information acquired by the GPS device or the like mounted on the own vehicle and the intersection information stored in the storage unit 102.

In step S222, the control unit 201 transmits a message for requesting the termination of relaying (relay termination request message) to the roadside apparatus 10 via the communication processing unit 203. The relay termination request message is the message identified to be received by the roadside apparatus 10 in step S114 (Fig. 6). The format of the relay termination request message may be the same format (data structure) as that of the discovery message including the relay request (Fig. 5), for example. In such a case, it is possible to indicate that the message is the relay termination request message by setting values of Relay Mode and Valid Period illustrated in Fig. 5 to predetermined values.

On the other hand, in step S224, the control unit 201 determines whether a Sidelink communication message transmitted by another terminal (UE) is received via the wireless communication unit 204. If the determination is affirmative, the control unit 201 advances the processing to Sidelink reception processing (step S300). If the determination is negative, the control unit 201 advances the processing to step S206.

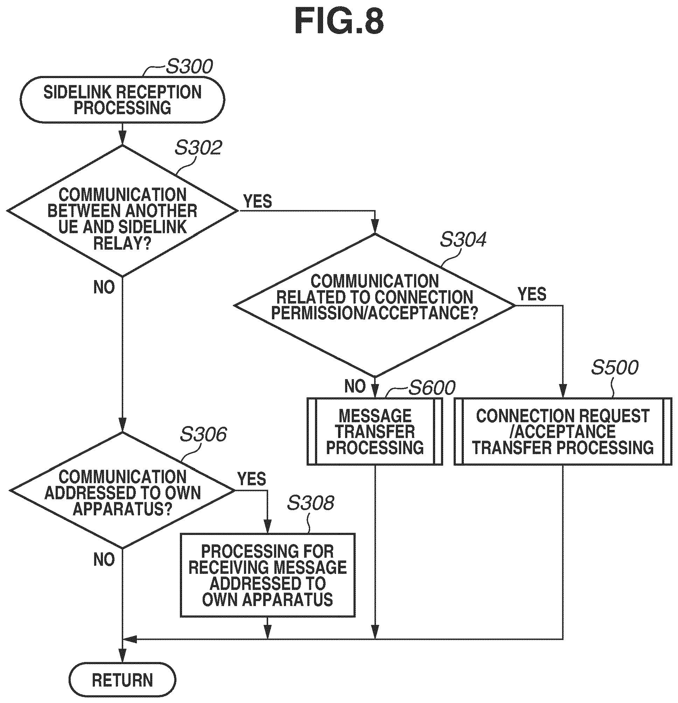

Fig. 8A is a flowchart illustrating the Sidelink reception processing (step S300).

In step S302 of Fig. 8A, the control unit 201 determines whether the received Sidelink communication message is a message to be transmitted and received between another terminal apparatus (UE) and the roadside apparatus 10. If the determination is affirmative, the control unit 201 advances the processing to step S304. If the determination is negative, the control unit 201 advances the processing to step S306.

In step S304, the control unit 201 determines whether the received Sidelink communication message is either a relay request message to the roadside apparatus 10 (Sidelink relay) or an acceptance message for a relay request. If the determination is affirmative, the control unit 201 advances the processing to step S500 (connection request/acceptance transfer processing). If the determination is negative, the control unit 201 advances the processing to step S600 (message transfer processing). If the determination in step S304 is negative, the Sidelink communication message includes an information exchange message for exchanging information between vehicles. The information exchange message may include vehicle information such as a vehicle speed, vehicle acceleration, and accelerator position.

In the present exemplary embodiment, if the determination in step S304 is negative, the processing may return without performing step S600 (message transfer processing). In such a case, messages for the own vehicle to transfer are limited to relay request messages and acceptance messages. The determination in step S304 may be affirmative only if the received Sidelink communication message is the relay request message to the roadside apparatus 10 (Sidelink relay), and the determination in step S304 may be negative for other messages. In such a case, the messages for the own vehicle to transfer are limited to the relay request messages.

In step S306, the control unit 201 determines whether the received Sidelink communication message is a message addressed to the own apparatus. If the determination is affirmative, the control unit 201 advances the processing to step S308. If the determination is negative, the control unit 201 returns the processing. Here, Sidelink communication messages of which the determination in step S306 is affirmative are not limited to ones via the roadside apparatus 10, and also include Sidelink communication messages directly transmitted from other terminals (UEs) to the own vehicle.

In step S308, the control unit 201 performs necessary processing such as analysis of the received Sidelink communication message using the communication processing unit 203, and returns the processing. For example, in step S308, the control unit 201 generates a necessary Sidelink communication message based on an analysis result in step S308, and transmits the generated Sidelink communication message using the wireless communication unit 204. The generated Sidelink communication message is transmitted to the communication apparatuses of other vehicles and pedestrians, or to the roadside apparatus 10 (with Layer-2 ID "KKK" as the destination).

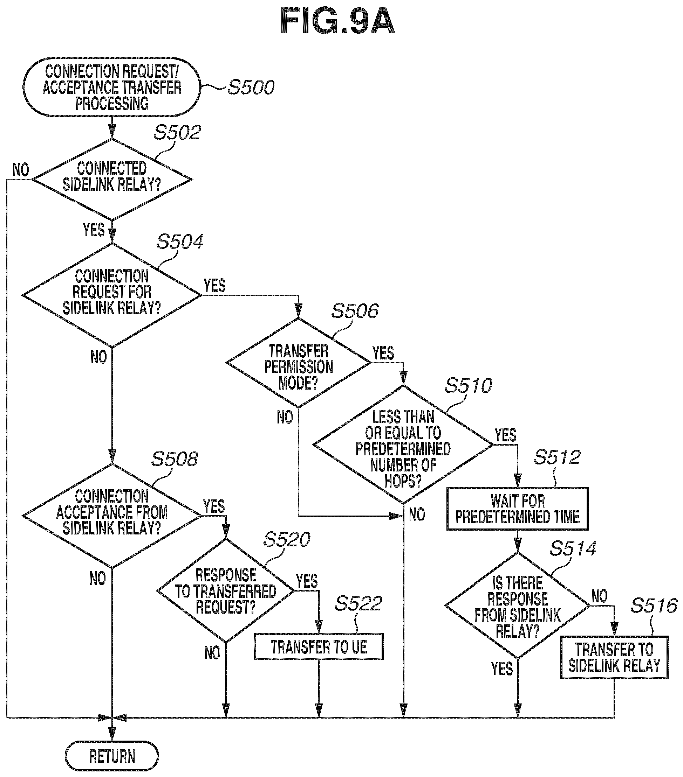

Fig. 9A is a flowchart illustrating the connection request/acceptance transfer processing (step S500).

In step S502 of Fig. 9A, the control unit 201 determines whether the received Sidelink communication message is a message regarding the roadside apparatus 10 (Sidelink relay) to which the own apparatus is connected. If the determination is affirmative, the control unit 201 advances the processing to step S504. If the determination is negative, the control unit 201 returns the processing. Whether the own apparatus is connected to the roadside apparatus 10 (Sidelink relay) can be determined, for example, based on whether the own vehicle has completed parameter settings related to the Sidelink relay function (step S108).

In step S504, the control unit 201 determines whether the received Sidelink communication message is a relay request message for the roadside apparatus 10 (Sidelink relay). If the determination is affirmative, the control unit 201 advances the processing to step S506. If the determination is negative, the control unit 201 advances the processing to step S508.

In step S506, the control unit 201 determines whether the received relay request message is set to a transfer permission mode. If the determination is affirmative, the control unit 201 advances the processing to step S510. If the determination is negative, the control unit 201 returns the processing. Transferability of the relay request message to be determined in step S506, i.e., whether to set the transfer permission mode, can be determined by the transmission source of the relay request message or the roadside apparatus 10 (Sidelink relay). Whether the transfer permission mode is set may be included in the information of the message.

In step S510, the control unit 201 determines whether the number of hops indicated by the received relay request message is less than or equal to a predetermined number of hops. If the determination is affirmative, the control unit 201 advances the processing to step S512. If the determination is negative, the control unit 201 returns the processing.

In step S512, the control unit 201 waits for a predetermined time. Then, the control unit 201 advances the processing to step S514.

In step S514, the control unit 201 determines whether a connection acceptance or connection rejection message responding to the received relay request message is transmitted from the roadside apparatus 10 (Sidelink relay) (received by the own apparatus). If the determination is affirmative, the control unit 201 returns the processing. If the determination is negative, the control unit 201 advances the processing to step S516. In step S516, the determination is affirmative if the foregoing connection acceptance or connection rejection message is received by the wireless communication unit 204.

In step S516, the control unit 201 transfers the relay request message transmitted from another apparatus (the relay request message identified in step S504) to the roadside apparatus 10 (Sidelink relay) using the wireless communication unit 204.

On the other hand, in step S508, the control unit 201 determines whether the received Sidelink communication message is a connection acceptance message. If the determination is affirmative, the control unit 201 advances the processing to step S520. If the determination is negative, the control unit 201 returns the processing.

In step S520, the control unit 201 determines whether the received Sidelink communication is a response (reply) to the relay request message transferred to the roadside apparatus 10 (Sidelink relay) by the own apparatus in step S516. If the determination is affirmative, the control unit 201 advances the processing to step S522. If the determination is negative, the control unit 201 returns the processing.

In step S522, the control unit 201 transfers the response (reply) to the relay request message to a response destination (UE) indicated by the message using the wireless communication unit 204, and returns the processing.

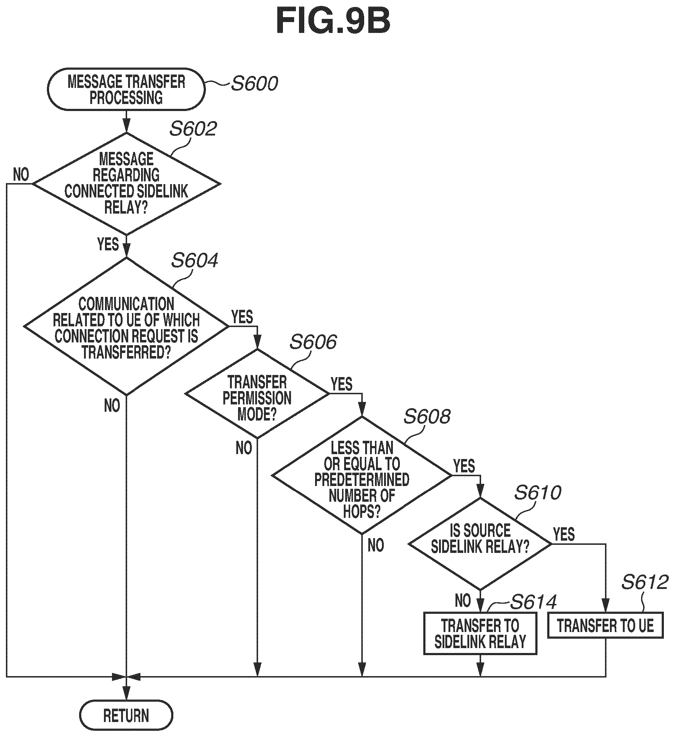

Fig. 9B is a flowchart illustrating the message transfer processing (step S600). In the connection request/acceptance transfer processing (step S600), processing for relaying communication messages other than the foregoing relay request and acceptance messages between the roadside apparatus 10 and the terminal UEs (vehicles 20A to 20E) is performed.

In step S602 of Fig. 9B, the control unit 201 determines whether the received Sidelink communication message is a message regarding the roadside apparatus 10 (Sidelink relay) to which the own apparatus is connected. If the determination is affirmative, the control unit 201 advances the processing to step S604. If the determination is negative, the control unit 201 returns the processing. Whether the own apparatus is connected to the roadside apparatus 10 (Sidelink relay) can be determined, for example, based on whether the own vehicle has completed the parameter settings related to the Sidelink relay function (step S108).

In step S604, the control unit 201 determines whether the communication relates to the apparatus (UE) of which the relay request message is transferred by the own apparatus in step S516. If the determination is affirmative, the control unit 201 advances the processing to step S606. If the determination is negative, the control unit 201 returns the processing.

In step S606, the control unit 201 determines whether the received Sidelink communication message is set to the transfer permission mode. If the determination is affirmative, the control unit 201 advances the processing to step S608. If the determination is negative, the control unit 201 returns the processing. Transferability of the message to be determined in step S606, i.e., whether to set the transfer permission mode, can be determined by the transmission source of the message or the roadside apparatus 10 (Sidelink relay). Whether the transfer permission mode is set may be included in the information of the message, the relay request message, or the message responding to the relay request message.

In step S608, the control unit 201 determines whether the number of hops of the received Sidelink communication message is less than or equal to a predetermined number of hops. If the determination is affirmative, the control unit 201 advances the processing to step S610. If the determination is negative, the control unit 201 returns the processing.

In step S610, the control unit 201 determines whether the received Sidelink communication message is a message transmitted from the roadside apparatus 10 (Sidelink relay). If the determination is affirmative, the control unit 201 advances the processing to step S612. If the determination is negative, the control unit 201 advances the processing to step S614. The determination in step S610 is affirmative if the source of the received Sidelink communication message is the roadside apparatus 10. The determination in step S610 is negative if the source of the received Sidelink communication message is the apparatus (UE) of which the relay request message is transferred in step S516.

In step S612, the control unit 201 transfers the received Sidelink communication message to the apparatus (UE) of which the relay request message is transferred in step S516, using the wireless communication unit 204, and returns the processing. If the transmission source of the received Sidelink communication message is the apparatus (UE) of which the relay request message is transferred in step S516, the control unit 201 may return the processing without performing step S612. This can prevent the transmitted Sidelink communication message from being returned to the transmission source itself.

In step S614, the control unit 201 transfers the received Sidelink communication message to the roadside apparatus 10 (Sidelink relay) using the wireless communication unit 204. The processing returns.

As described above, execution of both step S612 and step S614 enables message exchange between the apparatus (UE) of which the relay request message is transferred in step S516 and the roadside apparatus 10 (Sidelink relay). In other words, messages (information exchange message and other messages) to be transmitted and received between the two apparatuses can be bidirectionally transferred. Either step S612 or step S614 may be skipped. In such cases, the transfer direction of messages to be transferred by the own vehicle is limited to one direction.

In the message transfer processing (step S600), whether the apparatus (UE) of which the relay request message is transferred in step S516 and the roadside apparatus 10 (Sidelink relay) can perform direct Sidelink communication therebetween may be determined. In such a case, the transfer may be terminated if the two apparatuses are determined to be able to perform direct Sidelink communication. For example, whether there is a response (reply) to the transmission of a message from either the apparatus (UE) of which the relay request message is transferred in step S516 or the roadside apparatus 10 (Sidelink relay) may be determined here. If there is a response (replay) (received by the own vehicle), the two apparatuses can be determined to be able to perform direct Sidelink communication. Such a determination may be made by either the apparatus (UE) of which the relay request message is transferred in step S516 or the roadside apparatus 10 (Sidelink relay). In such a case, either of the apparatuses may notify the message-transferring vehicle (own vehicle performing step S600) of the determination result.

In the message transfer processing (step S600), it is possible to detect that the own apparatus is no longer able to communicate with the roadside apparatus 10 (Sidelink relay) or that the communication is terminated. Upon such detection, the apparatus (UE) of which the relay request message is transferred in step S516 may be notified of termination of transfer.

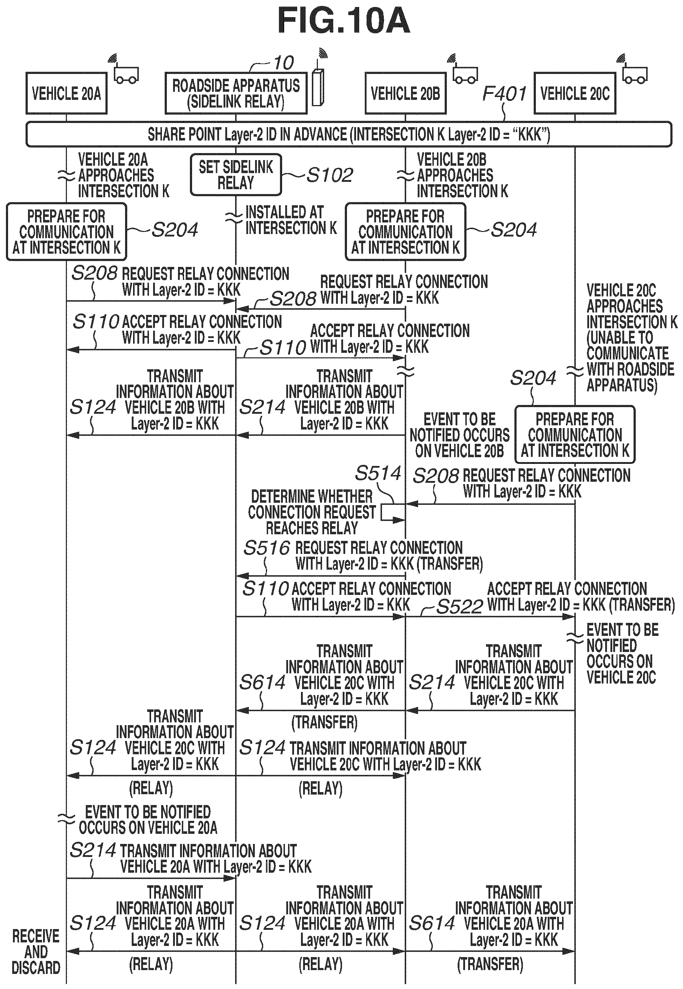

Fig. 10A is a diagram illustrating an example of a communication sequence between the roadside apparatus and vehicles through relay processing by another vehicle. The sequence includes relay processing by the vehicle 20B. Step numbers in Fig. 10A correspond to step numbers in Figs. 6 to 9B.

As illustrated in Fig. 10A, when the roadside apparatus 10 is installed at the intersection K, the Sidelink relay function of relaying Sidelink messages transmitted to the Layer-2 ID "KKK" of the intersection K is set for the roadside apparatus 10. The roadside apparatus 10 is then activated (step S102).

When the vehicle 20A approaches the intersection K, the communication apparatus 200 of the vehicle 20A is set to be able to transmit and receive Sidelink messages addressed to the Layer-2 ID "KKK" of the intersection K (step S204).

Next, the communication apparatus 200 of the vehicle 20A transmits a discovery message including a relay request addressed to the Layer-2 ID "KKK" of the intersection K to the roadside apparatus 10 (step S208).

The roadside apparatus 10 receiving the discovery message exchanges detailed information with the vehicle 20A, and configures operation settings of the Sidelink relay function with the Layer-2 ID "KKK" of the intersection K. The roadside apparatus 10 then transmits a relay acceptance message as a response to the discovery message (steps 108 to 110).

Similarly, the vehicle 20B, when approaching the intersection K, performs communication preparation with the Layer-2 ID of the intersection K (step S204). The vehicle 20B then transmits a discovery message (connection request) including a relay request addressed to the Layer-2 ID "KKK" of the intersection K (step S208). The roadside apparatus 10 receiving the discovery message configures the operation settings of the Sidelink relay function with the Layer-2 ID "KKK" of the intersection K. The roadside apparatus 10 then transmits a relay acceptance message as a response to the discovery message (steps S108 to S110).

The operations so far enable the vehicles 20A and 20B to communicate with each other using the Layer-2 ID "KKK" assigned to the intersection K via the roadside apparatus 10.

If, in such a state, an event (notification event) occurs in the vehicle 20B, the vehicle 20B transmits information (step S214). The information is then relayed to the vehicle 20A by the Sidelink relay function of the roadside apparatus 10 (step S124). If the communication method applied is multicasting, the information also reaches the vehicle 20B. The vehicle 20B determines that this is the information transmitted by itself based on the transmission source and the like of the information, and discards or ignores the information. The communication method applied will be described below.

Moreover, the vehicle 20C, when approaching the intersection K, performs communication preparation with the Layer-2 ID of the intersection K (step S204). The vehicle 20C transmits a discovery message including a relay request addressed to the Layer-2 ID of the intersection K (step S208).

In this state, the vehicle 20C is approaching the intersection K and unable to communicate directly with the roadside apparatus 10 because the distance is somewhat too large or the radio waves are blocked. Since the discovery message including the relay request does not reach the roadside apparatus 10, a connection acceptance message from the roadside apparatus 10 is not returned to the vehicle 20C. Meanwhile, the vehicle 20B is running between the roadside apparatus 10 and the vehicle 20C and is in a state capable of Sidelink communication with both the roadside apparatus 10 and the vehicle 20C (Fig. 1). In Fig. 1, a communication range SC of the vehicle 20C does not reach the roadside apparatus 10, and the vehicle 20C lies within the communication range SC.

The vehicle 20B that has already been connected to the Sidelink relay function of the roadside apparatus 10 receives the relay request message (discovery message including the relay request) from the vehicle 20C to the roadside apparatus 10, and makes a determination regarding a connection acceptance (relay acceptance) message. Specifically, the vehicle 20B determines whether a connection acceptance (relay acceptance) message is returned before a lapse of a certain time from the relay request (step S514). If the relay request (relay acceptance) message is not returned, the vehicle 20B transfers the relay request message transmitted from the vehicle 20C to the roadside apparatus 10 (step S516). In such a case, the vehicle 20B, when transferring the relay request message in step S516, performs operations needed for the roadside apparatus 10 to start transfer, such as storing a Layer-2 address of the own apparatus in the message. The roadside apparatus 10 receiving the transferred relay request message returns a Sidelink relay connection acceptance message with the Layer-2 ID "KKK" of the intersection to the vehicle 20B (step S110). The vehicle 20B transfers the received Sidelink relay connection acceptance message to the vehicle 20C (step S522).

The vehicle 20C and the roadside apparatus 10 then exchange detailed information via the vehicle 20B, and configure parameters related to the Sidelink relay function (steps S108, S308, S614, and S612).

The operations so far enable the vehicle 20C to communicate not only with the vehicle 20B via the roadside apparatus 10 having the Sidelink relay function, but also with the vehicle 20A using the Layer-2 ID "KKK" of the intersection.

After the start of transfer by the roadside apparatus 10, an event (notification event) occurs in the vehicle 20C. The vehicle 20C transmits information via the roadside apparatus 10 (Sidelink relay) (step S214), and the information is transferred to the roadside apparatus 10 by the vehicle 20B (step S614). The roadside apparatus 10 also transmits the information to the vehicle 20A connected by the Sidelink relay function (step S124). In the example of Fig. 10A, when the information about the event (notification event) in the vehicle 20C is transferred from the roadside apparatus 10 and received by the vehicle 20B, the vehicle 20B does not transfer the information to the vehicle 20C.

Similarly, if, in such a state, an event (notification event) occurs in the vehicle 20A, information transmitted from the vehicle 20A is relayed to the vehicles 20B and 20C by the Sidelink relay function of the roadside apparatus 10 (steps S124 and S614). If the communication method applied is multicasting, the information also reaches the vehicle 20A. The vehicle 20A determines that this is the information transmitted by itself, and discards or ignores the information.

When the relaying by the roadside apparatus 10 becomes unnecessary, such as when the vehicle 20A has moved away from the intersection K, the vehicle 20A transmits a relay termination request message to the roadside apparatus 10 (step S222). The roadside apparatus 10 receiving the relay termination request message accepts the termination of relaying, and transmits a relay termination completion message to the vehicle 20A (step S118). The suspension and termination of the relay operation by the Sidelink relay function of the roadside apparatus 10 are executed by the roadside apparatus 10 determining the situation.

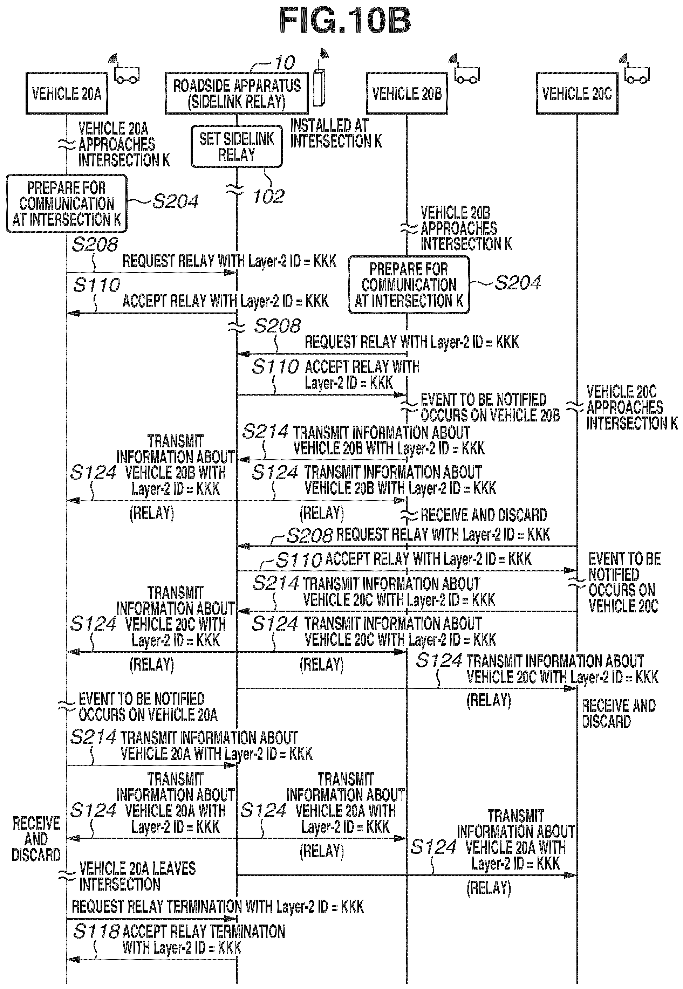

Fig. 10B is a diagram illustrating an example of a communication sequence between the roadside apparatus and vehicles, where the relay processing by another vehicle is not included. Step numbers in Fig. 10B correspond to step numbers in Figs. 6 to 9B.

As illustrated in Fig. 10B, when the roadside apparatus 10 is installed at the intersection, the Sidelink relay function of relaying Sidelink messages transmitted to the Layer-2 ID "KKK" of the intersection is set for the roadside apparatus 10, and the roadside apparatus 10 is activated (step S102).

When the vehicle 20A approaches the intersection, the communication apparatus 200 of the vehicle 20A is set to be able to transmit and receive Sidelink messages addressed to the Layer-2 ID "KKK" of the intersection (step S204).

Next, the communication apparatus 200 of the vehicle 20A transmits a discovery message including a relay request addressed to the Layer-2 ID "KKK" of the intersection to the roadside apparatus 10 (step S208).

The roadside apparatus 10 receiving the discovery message exchanges detailed information with the vehicle 20A, and configures the operation settings of the Sidelink relay function with the Layer-2 ID "KKK" of the intersection. The roadside apparatus 10 then transmits a relay acceptance message as a response to the discovery message (steps S108 to S110).

Similarly, the vehicle 20B, when approaching the intersection K, performs communication preparation with the Layer-2 ID of the intersection K (step S204), and transmits a discovery message (connection request) including a relay request addressed to the Layer-2 ID "KKK" of the intersection (step S208). The roadside apparatus 10 receiving the discovery message configures settings related to the use of the Sidelink relay function through mutual information exchange, and transmits an acceptance message (steps S108 to S110).

The operations so far enable the vehicles 20A and 20B to communicate with each other using the Layer-2 ID "KKK" assigned to the intersection K via the roadside apparatus 10.

If, in such a state, an event (notification event) occurs in the vehicle 20B, the vehicle 20B transmits information (step S214). The information is then relayed to the vehicle 20A by the Sidelink relay function of the roadside apparatus 10 (step S124). If the communication method applied is multicasting, the information also reaches the vehicle 20B. The vehicle 20B determines that this is the information transmitted by itself based on the transmission source and the like of the information, and discards or ignores the information. The communication method applied will be described below.

Moreover, when the vehicle 20C approaches the intersection K, the roadside apparatus 10 and the communication apparatus 202 of the vehicle 20C perform the processing of the foregoing steps S204, S208, and S110. This enables the vehicles 20A, 20B, and 20C to communicate with each other using the Layer-2 ID "KKK" assigned to the intersection K via the roadside apparatus 10.

If, in such a state, an event (notification event) occurs in the vehicle 20C, the vehicle 20C transmits information (step S214). The information is then relayed to the vehicles 20A and 20B by the Sidelink relay function of the roadside apparatus 10 (step S124). If the communication method applied is multicasting, the information also reaches the vehicle 20B. The vehicle 20B determines that this is the information transmitted by itself, and discards or ignores the information.

Similarly, if, in such a state, an event (notification event) occurs in the vehicle 20A, information transmitted from the vehicle 20A is relayed to the vehicles 20B and 20C by the Sidelink relay function of the roadside apparatus 10 (step S124). If the communication method applied is multicasting, the information also reaches the vehicle 20C. The vehicle 20C determines that this is the information transmitted by itself, and discards or ignores the information.

In the present exemplary embodiment, the Layer-2 ID "RRR" that is an identifier assigned to the roadside apparatus 10 can also be used as appropriate. The use of the Layer-2 ID "RRR" as the destination can indicate that the type or function of the communication message is different from when the relaying identifier is used. For example, the roadside apparatus 10 and the terminals (EUs) receiving the communication message can recognize that the received communication message is not the communication message concerning information exchange at the intersection KKK or that the communication message is a communication message that the roadside apparatus 10 is not requested to relay.

Next, Sidelink communication methods will be described.

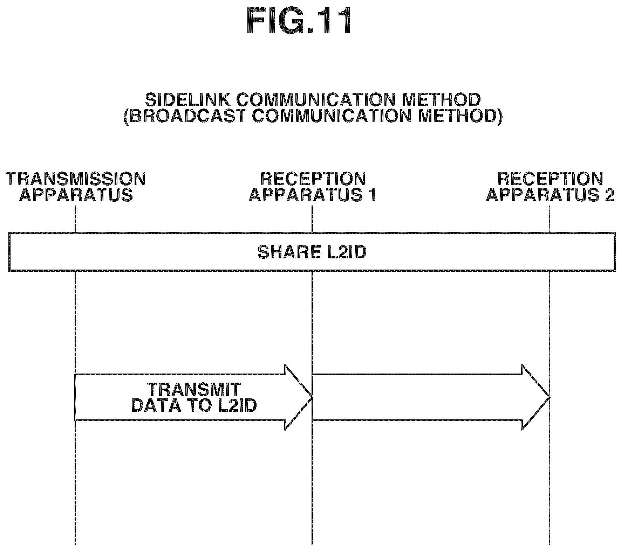

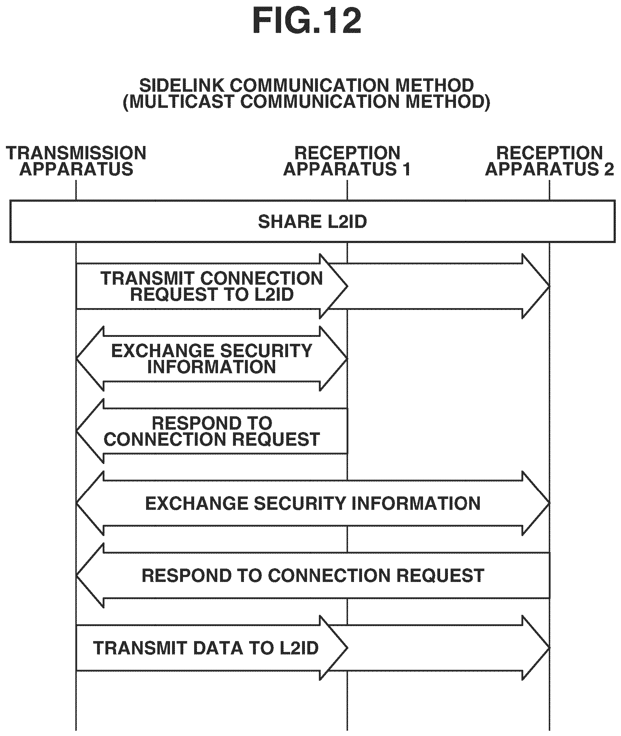

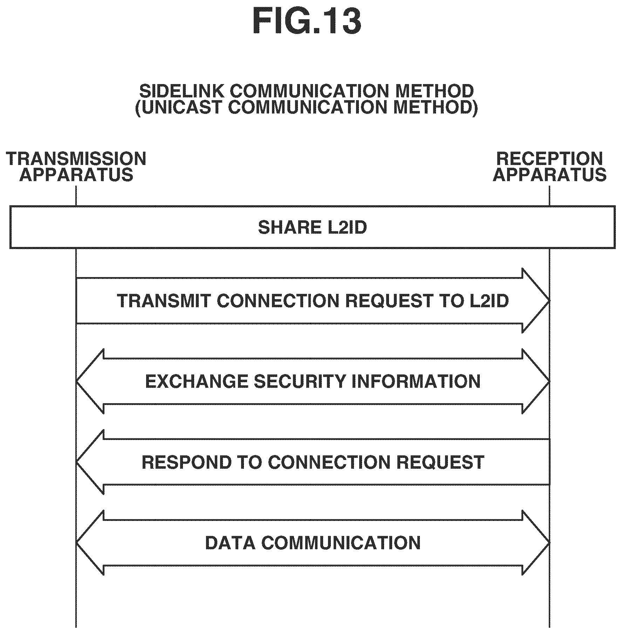

Fig. 11 is a diagram illustrating a broadcast communication method, Fig. 12 is a diagram illustrating a multicast (groupcast) communication method, and Fig. 13 is a diagram illustrating a unicast communication method.

In the case of the "broadcast communication method" illustrated in Fig. 11, transmission and reception apparatuses set the shared Layer-2 ID as a transmission destination and a reception destination, respectively.

By contrast, as illustrated in Figs. 12 and 13, in the case of the "multicast (groupcast) communication method" and the "unicast communication method", the transmission apparatus transmits a relay request ("relay request" in Figs. 12 and 13) with the shared Layer-2 ID as the destination. The reception apparatus having the shared Layer-2 ID responds thereto to exchange security information and return a response to the foregoing relay request ("connection request response" in Figs. 12 and 13), thereby enabling data communication.

While, in the present exemplary embodiment, any of the communication methods can be applied, the foregoing processing has been described by using the "multicast communication method".

By the way, as described above, terminals (UEs) such as the vehicles 20A, 20B, and 20C can perform direct Sidelink communication with each other without the relaying by the roadside apparatus 10. In other words, the direct Sidelink communication coexists with the communication using the relaying by the roadside apparatus 10. Incidentally, the direct Sidelink communication coexists with the communication using the relaying by the roadside apparatus 10. An identical terminal (UE) can therefore receive messages with substantially the same content a plurality of times, and the processing in such a case is left to the terminal (UE) having received the messages. For example, the second and subsequent messages received with substantially the same content may be discarded or ignored.

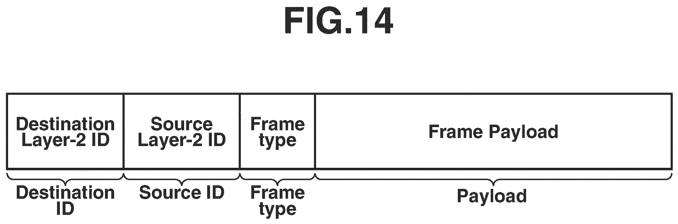

Fig. 14 is a diagram illustrating an example of a data structure of a discovery message when a terminal (UE) performs direct Sidelink communication.

As illustrated in Fig. 14, when terminals (UEs) such as the vehicles 20A to 20E search for a terminal (UE) without a relay function, the discovery message to be transmitted does not include information indicating a relay request.

As described above, according to the foregoing exemplary embodiment, the terminals (vehicles 20A to 20E; UEs) request relaying of Sidelink communication addressed to the specific Layer-2 ID "KKK" assigned to the intersection K using relay request messages. The relay request enables the relaying by the roadside apparatus 10. The terminals (UEs) can thus issue a relay request even if the presence or absence of a roadside apparatus 10 (Sidelink relay) capable of relaying is unknown. Moreover, the terminals (UEs) can be informed of the Layer-2 ID of the relay apparatus from the response to the relay request messages. Furthermore, the roadside apparatus 10 can learn the specific Layer-2 IDs to be relayed from destination information included in the relay request messages. The roadside apparatus 10 can thereby relay Sidelink messages addressed to the Layer-2 ID "KKK". The relaying of the Sidelink communications by the roadside apparatus 10 can thus extend the communication range.

Moreover, according to the foregoing exemplary embodiment, the communication range can be extended even if the roadside apparatus 10 (Sidelink relay) and the terminal (vehicle 20C) are unable to communicate directly with each other. More specifical, in such a case, the roadside apparatus 10 (Sidelink relay) and the terminal (vehicle 20C) can transmit and receive messages through message transfer by another terminal (vehicle 20B). As a result, in an environment, such as an intersection, where the Sidelink communication has a short range or there are many blind spots due to the presence of buildings or numerous vehicles, all the terminals (UEs) involved in the intersection or the like can exchange information.

### <Modification>

The UEs such as the vehicles 20A to 20E can be configured so that whether to perform relaying to extend the communication range is set by user operations. In such a case, if the relaying is set to be performed, the control to transfer messages addressed to another terminal as described in the foregoing exemplary embodiment is performed. If the relaying is not set to be performed, the control to transfer messages addressed to another terminal may be controlled to not be performed. The UEs may be configured so that the setting as to whether to perform the relaying to extend the communication range is switched based on a remaining battery level.

### <Other Exemplary Embodiments>

The present invention can also be implemented by processing for supplying a program for implementing one or more functions of the foregoing exemplary embodiment to a system or an apparatus via a network or a storage medium, and reading and executing the program by one or more processors in a computer of the system or the apparatus. A circuit that implements one or more functions (for example, ASIC) can also be used for implementation.

Moreover, for example, in the foregoing exemplary embodiment, the wireless access method is NR (New Radio) that is a 5G wireless access method. However, other access methods such as 6G or later and Wi-Fi may be applied at least in part.

Sidelink communications are not limited to discovery messages. For example, messages related to Direct communication and messages related to V2X communication may be used.

The invention is not limited to the foregoing exemplary embodiments, and various modifications and changes can be made without departing from the spirit and scope of the invention. Therefore, claims are attached to make the scope of the invention public.

This application claims the benefit of Japanese Patent Application No. 2022-145756, filed September 14, 2022, which is hereby incorporated by reference herein in its entirety.

## Claims

1. A communication apparatus having a Sidelink communication function, the communication apparatus comprising:
a determination means for determining whether another communication apparatus and a relay apparatus having a Sidelink relay function are able to communicate with each other; and
a communication means for, in a case where the other communication apparatus and the relay apparatus are determined to be unable to communicate with each other by the determination means, transferring a message to be transmitted and received between the other communication apparatus and the relay apparatus.

2. The communication apparatus according to Claim 1, wherein, in a case where transmission of a relay request message from the other communication apparatus to the relay apparatus is identified and then a response message from the relay apparatus to the other communication apparatus to respond to the relay request message is not identified based on a signal received by the communication means, the determination means determines that the other communication apparatus and the relay apparatus are unable to communicate with each other.

3. The communication apparatus according to Claim 2, wherein, in a case where the response message is not identified even after a lapse of a predetermined time from when the transmission of the relay request message from the other communication apparatus to the relay apparatus is identified, the determination means determines that the other communication apparatus and the relay apparatus are unable to communicate with each other.

4. The communication apparatus according to Claim 2 or 3, wherein, in the case where the other communication apparatus and the relay apparatus are determined to be unable to communicate with each other by the determination means, the communication means transfers the relay request message to the relay apparatus.

5. The communication apparatus according to any one of Claims 2 to 4, wherein, in the case where the other communication apparatus and the relay apparatus are determined to be unable to communicate with each other by the determination means, the communication means transfers the response message to the other communication apparatus.

6. The communication apparatus according to any one of Claims 1 to 5, wherein the communication means transfers the message to be transmitted and received between the relay apparatus to which the own communication apparatus is connected and the other communication apparatus.

7. The communication apparatus according to any one of Claims 1 to 6, wherein the message transferred by the communication means includes an information exchange message.

8. The communication apparatus according to Claim 7, wherein the communication means transfers the information exchange message in one or both of directions from the other communication apparatus to the relay apparatus and from the relay apparatus to the other communication apparatus.

9. The communication apparatus according to any one of Claims 1 to 8, wherein the communication means transfers only the message of which the transferring is permitted by the other communication apparatus or the relay apparatus and that includes information indicating that the transferring is permitted.

10. The communication apparatus according to any one of Claims 1 to 9, wherein, in a case where the other communication apparatus and the relay apparatus are determined to have become able to communicate directly with each other based on a notification from the other communication apparatus or the relay apparatus, the communication means terminates the transferring.

11. The communication apparatus according to any one of Claims 1 to 10, wherein, in a case where the communication means and the relay apparatus become unable to communicate with each other, the communication means terminates the transferring and notifies the other apparatus that the transferring is terminated.

12. The communication apparatus according to any one of Claims 1 to 11, wherein, in a case where a number of hops of a message received from the other communication apparatus or the relay apparatus exceeds a predetermined number, the communication means does not transfer the message.

13. A control method of a communication apparatus having a Sidelink communication function, the control method comprising:
a determination step of determining whether another communication apparatus and a relay apparatus having a Sidelink relay function are able to communicate with each other; and
a transfer step of, in a case where the other communication apparatus and the relay apparatus are determined to be unable to communicate with each other in the determination step, transferring a message to be transmitted and received between the other communication apparatus and the relay apparatus.

14. A program for causing a computer of a communication apparatus having a Sidelink communication function to perform:
a determination step of determining whether another communication apparatus and a relay apparatus having a Sidelink relay function are able to communicate with each other; and
a transfer step of, in a case where the other communication apparatus and the relay apparatus are determined to be unable to communicate with each other in the determination step, transferring a message to be transmitted and received between the other communication apparatus and the relay apparatus.

15. A communication system comprising:
a first communication apparatus having a Sidelink communication function;
a second communication apparatus having the Sidelink communication function; and
a relay apparatus having a Sidelink relay function,
wherein the first communication apparatus includes:
a determination means for determining whether the second communication apparatus and the relay apparatus are able to communicate with each other, and
a communication unit configured to, in a case where the second communication apparatus and the relay apparatus are determined to be unable to communicate with each other by the determination means, transfer a message to be transmitted and received between the second communication apparatus and the relay apparatus.

16. The communication system according to Claim 15,
wherein the relay apparatus is disposed in association with an intersection, and
wherein the first communication apparatus and the second communication apparatus move with moving bodies that pass the intersection.
